(19)

Europäisches
Patentamt

European
Patent Office

Office européen
des brevets

(11) **EP 4 186 042 B1**

(12) **EUROPÄISCHE PATENTSCHRIFT**

(45) Veröffentlichungstag und Bekanntmachung des
Hinweises auf die Patenterteilung:
**24.04.2024   Patentblatt 2024/17**

(21) Anmeldenummer: **21740425.0**

(22) Anmeldetag: **08.07.2021**

(51) Internationale Patentklassifikation (IPC):
**G07D 7/202** *(2016.01)*      **G07D 7/1205** *(2016.01)*

(52) Gemeinsame Patentklassifikation (CPC):
**G07D 7/205; G07D 7/1205**

(86) Internationale Anmeldenummer:
**PCT/EP2021/025250**

(87) Internationale Veröffentlichungsnummer:
**WO 2022/017640 (27.01.2022 Gazette 2022/04)**

(54) **VERFAHREN UND SENSOR ZUR PRÜFUNG VON WERTDOKUMENTEN**

METHOD AND SENSOR FOR TESTING VALUABLE DOCUMENTS

PROCÉDÉ ET CAPTEUR DESTINÉS À ANALYSER DES DOCUMENTS DE VALEUR

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **23.07.2020   DE 102020004471**

(43) Veröffentlichungstag der Anmeldung:
**31.05.2023   Patentblatt 2023/22**

(73) Patentinhaber: **Giesecke+Devrient Currency
Technology GmbH
81677 München (DE)**

(72) Erfinder: **RAUSCHER, Wolfgang
94365 Parkstetten (DE)**

(74) Vertreter: **Giesecke+Devrient IP
Prinzregentenstraße 161
81677 München (DE)**

(56) Entgegenhaltungen:
**US-A1- 2007 057 198      US-A1- 2016 171 810**

Anmerkung: Innerhalb von neun Monaten nach Bekanntmachung des Hinweises auf die Erteilung des europäischen
Patents im Europäischen Patentblatt kann jedermann nach Maßgabe der Ausführungsordnung beim Europäischen
Patentamt gegen dieses Patent Einspruch einlegen. Der Einspruch gilt erst als eingelegt, wenn die Einspruchsgebühr
entrichtet worden ist. (Art. 99(1) Europäisches Patentübereinkommen).

**Beschreibung**

Die vorliegende Erfindung betrifft einen Sensor und ein Verfahren zur Prüfung von Wertdokumenten sowie eine Wertdokumentbearbeitungsvorrichtung, die den Sensor aufweist.

Zur Prüfung von Wertdokumenten werden üblicherweise Sensoren verwendet, mit denen die Art der Wertdokumente bestimmt wird und/oder mit denen die Wertdokumente auf Echtheit und/oder auf ihren Zustand geprüft werden. Derartige Sensoren werden beispielsweise zur Prüfung von Wertdokumenten, wie Banknoten, Schecks, Ausweisen, Kreditkarten, Scheckkarten, Tickets, Gutscheinen und dergleichen verwendet. Die Wertdokumente werden in einer Vorrichtung geprüft, in der, je nach den zu prüfenden Wertdokumenteigenschaften, ein oder mehrere unterschiedliche Sensoren enthalten sind. Zur Prüfung der Wertdokumente werden diese dabei üblicherweise an dem/den ortsfesten Sensor(en), beispielsweise in einer Wertdokumentbearbeitungseinrichtung, vorbeitransportiert.

Ein zu prüfendes Wertdokument kann ein oder mehrere Sicherheitsmerkmale, wie Lumineszenzstoffe, magnetische Stoffe, etc. aufweisen. Zur Prüfung des Wertdokuments werden bei einem Lumineszenzstoff zum Beispiel die Abklingzeit bzw. Zeitkonstante des zeitlichen Intensitätsverlaufs der Lumineszenz und/oder die spektralen Eigenschaften der Lumineszenz geprüft. Zur Überprüfung der Abklingzeit der Lumineszenz ist es dabei bekannt, Wertdokumente mit Anregungspulsen anzuregen, insbesondere mit Lichtpulsen zu beleuchten, und, in der Dunkelphase zwischen den Anregungs- bzw. Lichtpulsen, die Lumineszenzintensität des Wertdokuments zu verschiedenen Zeitpunkten nach Ende des Anregungspulses zu detektieren. Aus dem zeitlichen Abklingen der Lumineszenzintensität wird dann z.B. die Abklingzeit eines mono-exponentiellen Abklingens der Lumineszenz bestimmt.

Der oder die zu prüfenden Lumineszenzstoffe des Wertdokuments können dabei bereichsweise oder vollflächig auf oder in dem Wertdokument vorhanden sein, beispielsweise in dem Substrat eingebracht oder auf das Substrat bzw. Wertdokument aufgedruckt, und/oder auch bereichsweise abgedeckt bzw. abgeschirmt sein, beispielsweise durch ein Sicherheitselement, wie einen weiteren Aufdruck oder einen Patch oder LEAD-Streifen. Mit anderen Worten kann der zu prüfende Lumineszenzstoff sowohl vollflächig homogen auf oder in der Banknote vorliegen, als auch als Bestandteil einer Drucktinte gemustert auf die Banknote aufgebracht sein. In beiden Fällen kann über dem Lumineszenzstoff eine Überdruckung vorliegen, die Teile der Anregungs- und/ oder Emissionsstrahlung des Lumineszenzstoffs absorbiert. Dadurch entstehen räumliche Strukturen in der messbaren Lumineszenzintensität. Im Fall eines aufgedruckten Lumineszenzmerkmals kann außerhalb des bedruckten Bereichs auch gar keine Lumineszenz messbar sein. Im Allgemeinen weist ein Wertdokument daher aufgrund dieser räumlichen Strukturen in der Dichte des Lumineszenzstoffs und/oder dessen Abschirmung eine örtliche Variation der bei gegebener Anregung erzielten Lumineszenzintensität auf. Dabei können diese räumlichen Strukturen bzw. die örtliche Variation der erzielbaren Lumineszenzintensität, etwa bei Banknoten unterschiedlicher Denomination, verschieden sein.

Zugleich werden in bekannten Wertdokumentbearbeitungsvorrichtungen die Wertdokumente während der Prüfung üblicherweise schnell am ortsfesten Sensor vorbeibewegt, z.B. mit einer Transportgeschwindigkeit von 1 bis 12 m/s. Auch im Fall von derartig schnell bewegten Wertdokumenten wird das Wertdokument mit einem Anregungspuls, etwa einem Beleuchtungsblitz beleuchtet, um den Lumineszenzstoff anzuregen, und anschließend die Lumineszenzintensität zu endlich vielen verschiedenen Zeitpunkten abgetastet, um das Abklingverhalten der Lumineszenz zu ermitteln. Auf diese Weise erhält man als Datensatz eine zeitlich diskret abgetastete Abklingkurve, wobei sich bei den einzelnen Messungen jeweils verschiedene Stellen des Wertdokuments im Detektionsbereich des Detektors befinden, da sich das Wertdokument zwischen den diskreten Messzeitpunkten einer gegebenen Abklingkurve weiterbewegt. Entsprechend wird allgemein die Lumineszenzintensität zu Beginn der Abklingkurve von einer anderen Stelle des Wertdokuments gemessen als am Ende der Abklingkurve. Bei einer Transportgeschwindigkeit von 10 m/s entspricht ein zeitlicher Abstand von 100 $\mu$s einem räumlichen Abstand von 1 mm. Dieser Abstand ist groß gegenüber den räumlichen Strukturen eines Druckbilds, aber klein gegenüber der Gesamtgröße des Wertdokument. Derartige Abklingkurven können daher an vielen Stellen eines bewegten Wertdokuments aufgenommen werden, um eine räumliche Verteilung des Abklingverhaltens zu erhalten. Für eine genaue Prüfung des Wertdokuments wird die Länge der gemessenen Abklingkurve, also der späteste Messzeitpunkt, an das erwartete Abklingverhalten der Lumineszenz angepasst. Ein großer räumlicher Abstand zwischen dem ersten und dem letzten Messpunkt entsteht also insbesondere für große Transportgeschwindigkeiten im Bereich von 1 - 12 m/s und große Abklingzeiten im Bereich von 80 $\mu$s bis 2 ms.

Entsprechend wird, insbesondere im Fall einer großen Transportgeschwindigkeit und/oder bei großer Abklingzeit der Lumineszenz des Wertdokuments, eine Abklingkurve bzw. ein zeitlicher Intensitätsverlauf der Lumineszenz detektiert, die/der in Folge der Transportbewegung und der räumlichen Strukturen, im Vergleich zu einem an einem unbewegten Wertdokument detektierten Intensitätsverlauf, gegebenenfalls verfälscht ist. Da sich - wie erwähnt - eine Banknote während der Messung der Abklingkurve weiterbewegt, kann sich am Anfang der Abklingkurve eine Stelle mit ungestörter Lumineszenzintensität befinden und am Ende der Abklingkurve eine Stelle, bei der die Intensität nicht nur durch das Abklingen der Lumineszenz reduziert ist, sondern zusätzlich durch einen weiteren Effekt, insbesondere durch ein über dem Lumineszenzstoff vorhandenes Sicherheitselement, wie z.B. durch eine Intensitäts-reduzierende Überdruckung, ein Durchsichtsregister oder ein Hologramm. In diesem Fall fällt die Abklingkurve schneller ab als erwartet, und der ermittelte Abklingparameter deutet auf ein schneller abklingendes Lumineszenzmerkmal hin als das tatsächlich verwendete Lumineszenzmerkmal.

Umgekehrt kann sich die Banknote während der Messung der Abklingkurve von einer bzgl. Intensität gestörten Stelle zu einer bzgl. Intensität ungestörten Stelle bewegen. In diesem Fall fällt die Abklingkurve langsamer ab als erwartet, und der ermittelte Abklingparameter deutet auf ein langsamer abklingendes Lumineszenzmerkmal hin als das tatsächlich verwendete Lumineszenzmerkmal. Im Extremfall kann die gemessene Lumineszenzintensität auch einen nicht-monotonen Verlauf zeigen und zunächst ansteigen und anschließend abfallen.

In beiden Fällen ist der Verlauf der gemessenen Lumineszenzintensität nicht mono-exponentiell, bzw. zeigt nicht die funktionale Form, die für das verwendete Lumineszenzmerkmal erwartet wird. Im Ergebnis kann somit bei hohen Transportgeschwindigkeiten und/ oder bei großen Abklingzeiten der Lumineszenz des Wertdokuments die Abklingzeit der Lumineszenz gegebenenfalls nur ungenau und nur mit großen Unsicherheiten bestimmt werden.

Jedoch ist es wünschenswert, auch im Fall von bewegten Wertdokumenten die Abklingzeit der Lumineszenz eines in dem Wertdokument vorhandenen Lumineszenzstoffs möglichst genau zu bestimmen. Denn je genauer man das Abklingverhalten bestimmen kann, desto enger kann man die Schwellen bei der Prüfung des Wertdokuments, z.B. der Banknote, einstellen, und desto höher ist die Fälschungssicherheit.

US 2007/0057198A offenbart ein Verfahren zum Prüfen von Wertdokumenten mit Lumineszenzmerkmalen, wobei nach Anregung zwei Intensitätsverläufe ermittelt werden aus denen die Abklingzeit des Lumineszenzstoffs ermittelt wird. Die beiden Intensitätsverläufe werden dabei jeweils zu einem Intensitätswert zusammengefasst und diese beiden Werte werden dann zur Bestimmung der Abklingzeit herangezogen. Die Bewertung/Prüfung des Wertdokuments beruht auf der ermittelten Abklingzeit.

Eine Aufgabe der vorliegenden Erfindung ist es, ein Verfahren und einen Sensor zur Prüfung von Wertdokumenten bereitzustellen, durch das/den die Zeitkonstante einer Lumineszenz des Wertdokuments bei großen Transportgeschwindigkeiten mit verbesserter Genauigkeit bzw. Zuverlässigkeit bestimmt werden kann.

Diese Aufgabe wird durch ein Verfahren und einen Sensor zur Prüfung von Wertdokumenten gemäß den unabhängigen Ansprüchen gelöst. In den abhängigen Ansprüchen sind vorteilhafte Weiterbildungen und Ausgestaltungen der Erfindung angegeben.

Erfindungsgemäß werden die zu prüfenden Wertdokumente, insbesondere Banknoten, in einer Transportrichtung an einem Sensor vorbeitransportiert, wobei die Wertdokumente ein Sicherheitsmerkmal mit einem Lumineszenzstoff aufweisen, der in Reaktion auf eine entsprechend geeignete Anregung durch eine Anregungsquelle, vorzugsweise durch einen Anregungspuls, eine Lumineszenz emittiert, die als Funktion der Zeit t relativ zu dem Anregungszeitpunkt, insbesondere zu dem Anregungspuls bzw. dessen Ende, einen Intensitätsverlauf, insbesondere einen abklingenden Intensitätsverlauf, aufweist mit einer charakteristische Abklingzeit bzw. Zeitkonstante $\tau_0$. Die charakteristische Zeitkonstante $\tau_0$, die der Intensitätsverlauf der Lumineszenz des Wertdokuments aufweist, liegt beispielsweise im Bereich von 10 $\mu$s bis 5 ms, bevorzugt im Bereich von 80 $\mu$s bis 2 ms

Das erfindungsgemäße Verfahren umfasst zunächst den Schritt des Detektierens einer ersten Vielzahl von Intensitätsverläufen auf dem vorbeitransportierten Wertdokument, insbesondere mittels eines Photodetektors des Sensors oder mittels mehrerer Photodetektoren des Sensors, als Funktion der Zeit, während das Wertdokument zu dessen Prüfung an dem Sensor vorbeitransportiert wird. Der Photodetektor ist z.B. eine Photodiode, ein Phototransistor, ein Photowiderstand oder auch ein Photomultiplier, das heißt ein Lichtsensor, der im einfachsten Fall keine spektrale Auflösung liefert und beispielsweise das gesamte Lumineszenzspektrum oder einen Teil davon als jeweils einen einzigen Messwert detektiert. Dazu sind dem Photodetektor beispielsweise geeignete optische Filter vorgeschaltet, die etwa das Anregungslicht ausfiltern und/oder nur einen vorbestimmten Anteil des Lumineszenzspektrums durchlassen. Allerdings ist prinzipiell auch denkbar, einen Photodetektor zu verwenden, der eine spektrale Auflösung liefert.

Das erfindungsgemäße Verfahren umfasst weiterhin den Schritt des Zusammenfassens der ersten Vielzahl von Intensitätsverläufen oder einer aus der ersten Vielzahl ausgewählten zweiten Vielzahl von Intensitätsverläufen zu einem zusammengefassten Intensitätsverlauf, und den Schritt des Bestimmens einer Zeitkonstante $\tau$ des zusammengefassten Intensitätsverlaufs.

Die verschiedenen Intensitätsverläufe der ersten Vielzahl von Intensitätsverläufen werden, insbesondere gleichzeitig oder sequentiell, von unterschiedlichen Orten bzw. Erfassungsbereichen auf dem Wertdokument detektiert, während das Wertdokument an dem Sensor vorbeitransportiert wird. Der Erfassungsbereich ist derjenige Bereich des Wertdokuments, der von dem Detektionsbereich des jeweiligen ortsfesten Photodetektors des Sensors während des Detektierens des zu dem Anregungspuls gehörigen Intensitätsverlaufs überstrichen wird.

In den zusammengefassten Intensitätsverlauf gehen insbesondere die Intensitätsverläufe mehrerer unterschiedlicher Orte bzw. Erfassungsbereiche auf dem Wertdokument ein. Dadurch wird erreicht, dass die Zeitkonstante des Lumineszenzstoffs aus dem zusammengefassten Intensitätsverlauf genauer bestimmt werden kann, insbesondere bei einem in oder auf dem Wertdokument verteilten Lumineszenzstoff, der teilweise durch Sicherheitselemente überdeckt ist. Falls der zusammengefasste Intensitätsverlauf durch Zusammenfassen der zweiten Vielzahl von Intensitätsverläufen ermittelt wird, wird die Auswahl der zweiten Vielzahl aus der ersten Vielzahl vorzugsweise so getroffen, dass auch die verschiedenen Intensitätsverläufe der zweiten Vielzahl von Intensitätsverläufen von unterschiedlichen Orten bzw. Erfassungsbereichen auf dem Wertdokument detektiert worden sind.

Die unterschiedlichen Orte bzw. Erfassungsbereiche sind insbesondere derart auf dem Wertdokument angeordnet, dass sie nicht miteinander überlappen. Zum Beispiel werden ein erster Intensitätsverlauf der ersten Vielzahl von Intensitätsverläufen in einem ersten Erfassungsbereich auf dem Wertdokument und ein zweiter Intensitätsverlauf der ersten Vielzahl von Intensitätsverläufen in einem vom ersten Erfassungsbereich verschiedenen zweiten Erfassungsbereich auf dem Wertdokument detektiert, sowie ggf. weitere Intensitätsverläufe der ersten Vielzahl von Intensitätsverläufen in weiteren vom ersten und zweiten Erfassungsbereich verschiedenen weiteren Erfassungsbereichen auf dem Wertdokument. Bevorzugt sind die unterschiedlichen Orte bzw. Erfassungsbereiche, insbesondere der erste und zweite (und ggf. die weiteren) Erfassungsbereiche, entlang der Transportrichtung des Wertdokuments nacheinander auf dem Wertdokument angeordnet und/oder in verschiedenen (parallel zur Transportrichtung verlaufenden und senkrecht zur Transportrichtung zueinander versetzten) Messspuren auf dem Wertdokument angeordnet.

Zum Beispiel befindet sind zumindest einer der Erfassungsbereiche in einem überdeckten (z.B. überdruckten) Bereich des Wertdokuments, in dem über dem zu untersuchenden Lumineszenzstoff ein Sicherheitselement des Wertdokuments vorhanden ist, das die von dem Lumineszenzstoff detektierbare Lumineszenzintensität reduziert, und zumindest ein anderer der Erfassungsbereiche in einem nicht-überdeckten Bereich des Wertdokuments, in dem kein solches Sicherheitselement über dem zu untersuchenden Lumineszenzstoff vorhanden ist. Alternativ oder zusätzlich kann auch zumindest einer der Erfassungsbereiche an einer Grenze zwischen einem solchen überdeckten und einem solchen nicht-übergedeckten Bereich des Wertdokuments angeordnet sein und sich über diese Grenze hinweg erstrecken. Der Lumineszenzstoff des Wertdokuments kann bereichsweise oder vollflächig auf oder in dem Wertdokument vorhanden sein.

Zur Detektion eines Intensitätsverlaufs der ersten Vielzahl von Intensitätsverläufen gibt die Anregungsquelle des Sensors, die bevorzugt als Lichtquelle ausgebildet ist, zur Lumineszenzanregung des Sicherheitsmerkmals bzw. des Lumineszenzstoffs einen Anregungspuls ab, bevorzugt in Form eines Lichtpulses im UV-, VIS-, NIR- und/oder IR-Bereich. Die Eigenschaften des Anregungspulses (Spektrum, Dauer, Intensität, Form, etc.) sind dabei für den anzuregenden Lumineszenzstoff bzw. die anzuregende Lumineszenz geeignet eingestellt. Typischerweise liegt die Dauer des Anregungspulses im Bereich zwischen 1 und 100 $\mu$s und beträgt beispielsweise 1, 5, 10, 50 oder 100 $\mu$s, wobei jeder der genannten Werte auch eine Unter- oder Obergrenze des genannten Bereichs sein kann. An den Anregungspuls bzw. dessen Ende anschließend wird mit dem Photodetektor ein Intensitätsverlauf detektiert und der Zeitverlauf bzw. die Messzeit bzw. Messzeitpunkte des Intensitätsverlaufs werden relativ zu dem Anregungspuls bzw. relativ zu dessen Ende angegeben. Mit anderen Worten definiert der Anregungspuls bzw. das Ende des Anregungspulses den Messzeitpunkt bzw. die Messzeit Null. Zur Detektion des Intensitätsverlaufs wird beispielsweise das gesamte Lumineszenzspektrum oder - wie bereits oben erwähnt - ein Teil davon verwendet. Dabei sind üblicherweise die detektierten, diskreten Mess- bzw. Intensitätswerte der jeweiligen Intensitätsverläufe skalare Werte oder werden gegebenenfalls zu skalaren Werten zusammengefasst, beispielsweise wenn die Messwerte selbst eine spektrale Auflösung aufweisen. Wenn, z.B. im Falle eines spektral auflösenden Detektors, für jeden Messzeitpunkt ein Messwert mit mehreren, z.B. spektral, verschiedenen Komponenten vorliegt, kann das beschriebene Verfahren aber auch für eine oder mehrere dieser Komponenten separat angewandt werden.

Die detektierten Intensitätsverläufe bestehen bevorzugt jeweils aus einer Sequenz von diskreten Intensitätswerten, die zu jeweils vorgegebenen Messzeitpunkten, das heißt zu vorgegebenen Zeitpunkten nach bzw. relativ zu dem Anregungspuls des jeweiligen Intensitätsverlaufs, detektiert bzw. erfasst werden. Da sich das Wertdokument - gerade bei hoher Transportgeschwindigkeit - während der Detektion der diskreten Intensitätswerte des jeweiligen Intensitätsverlaufs um eine bestimmte Strecke entlang der Transportrichtung weiter bewegt, wird der diskrete Intensitätswert zu Beginn des jeweiligen Intensitätsverlaufs von einem anderen Detektionsbereich des Wertdokuments detektiert als der diskrete Intensitätswert am Ende des jeweiligen Intensitätsverlaufs. Bei jedem der detektierten Intensitätsverläufe stammen die diskreten Intensitätswerte des jeweiligen Intensitätsverlaufs daher von verschiedenen Detektionsbereichen des Wertdokuments. Diese Detektionsbereiche des jeweiligen Intensitätsverlaufs bilden den zu dem jeweiligen Intensitätsverlauf gehörigen Erfassungsbereich. Die Detektionsbereiche des jeweiligen Erfassungsbereichs bzw. des jeweiligen Intensitätsverlaufs sind entlang der Transportrichtung zueinander versetzt, können aber - je nach Transportgeschwindigkeit, Abtastfrequenz und Ortsauflösung bei der Detektion - ggf. teilweise miteinander überlappen.

Bevorzugt sind die Messzeitpunkte sämtlicher Intensitätsverläufe der ersten Vielzahl von Intensitätsverläufen identisch, das heißt, die diskreten Intensitätswerte der jeweiligen Intensitätsverläufe werden zu gleichen Zeitpunkten nach bzw. relativ zu dem jeweiligen Anregungspuls erfasst. Weiterhin ist bevorzugt für die Intensitätsverläufe ein vorbestimmter End-Messzeitpunkt vorgesehen, zu dem jeweils der letzte diskrete Intensitätswert detektiert wird, so dass nach diesem End-Messzeitpunkt die Detektion eines gegebenen Intensitätsverlaufs beendet ist und der Anregungspuls des nachfolgenden Intensitätsverlaufs ausgesendet werden kann. Dabei können die Vielzahl von diskreten Intensitätswerten eines jeweils gegebenen Intensitätsverlaufs regelmäßig bzw. periodisch detektiert werden, beispielsweise mit einem zeitlichen Abstand bzw. einer Periode von 10 $\mu$s, 20 $\mu$s, 50 $\mu$s oder 100 $\mu$s, was beispielsweise in Abhängigkeit der erwarteten charakteristischen Abklingzeit $\tau_0$ des zu bestimmenden Lumineszenzstoffs gewählt werden kann. Entsprechend kann auch der End-Messzeitpunkt, das heißt der mit dem größten zeitlichen Abstand zu dem Anregungspuls aufgenommene diskrete Intensitätswert, in Abhängigkeit der erwarteten charakteristischen Abklingzeit des zu detektierenden Lumineszenzstoffs gewählt werden. Beispielsweise liegt der End-Messzeitpunkt, relativ zum Ende der Lumineszenzanregung, mindestens beim Zweifachen oder Dreifachen oder Fünffachen oder Zehnfachen der charakteristischen Zeitkonstante $\tau_0$. Der End-Messzeitpunkt liegt beispielsweise zwischen 500 und 5000 $\mu$s und beträgt beispielsweise 500, 1000, 1500, 2000, 3000, 4000 oder 5000 $\mu$s, wobei jeder der genannten Werte auch eine Ober- und Untergrenze des genannten Bereichs sein kann. Entsprechend muss nicht das vollständige Abklingen der Lumineszenz abgewartet werden, sondern es kann unmittelbar nach dem End-Messzeitpunkt mit der nächstfolgenden Messung begonnen werden und entsprechend der Anregungspuls für den nächsten Intensitätsverlauf ausgesendet werden.

Besonders bevorzugt besteht die Sequenz bzw. Vielzahl von diskreten Mess- bzw. Intensitätswerten lediglich aus genau derjenigen Anzahl von Intensitätswerten, die für die anschließende Berechnung der Zeitkonstante $\tau$ notwendig sind. Entsprechend besteht besonders bevorzugt ein gegebener Intensitätsverlauf aus genau 2 oder mehr als 2, beispielsweise 3, 4, 5, 6, 8, 10 oder mehr Intensitätswerten. Beispielsweise werden für die weiter unten näher erläuterte Berechnung der Zeitkonstante $\tau$ auf Basis des Abklingquotienten (Formel 1), bei einem angenommenen mono-exponentiellen Abfall der Lumineszenz lediglich zwei Intensitätswerte benötigt (im Beispiel bei 10 $\mu$s und 1000 $\mu$s). Wenn in einer anderen Ausführung die Zeitkonstante $\tau$ anhand der weiter unten näher erläuterten Berechnung auf Basis der Ableitung (Formel 2) bestimmt wird, sind nur drei Intensitätswerte notwendig (im Beispiel bei 990 $\mu$s, 1000 $\mu$s und 1010 $\mu$s). Dies ermöglicht eine besonders schnelle Messung und Auswertung und damit eine Prüfung bei hohen Transportgeschwindigkeiten. Die Vielzahl von Intensitätswerten kann jedoch auch eine größere Anzahl von Messwerten umfassen, was eine genauere Prüfung ermöglicht.

Im einfachsten Fall wird die erste Vielzahl von Intensitätsverläufen, das heißt die Gesamtheit der auf einem Wertdokument detektierten Intensitätsverläufe zu einem einzigen gemeinsamen Intensitätsverlauf zusammengefasst. Optional wird jedoch beispielsweise noch ein Schritt des Auswählens einer zweiten Vielzahl von Intensitätsverläufen aus der ersten Vielzahl von Intensitätsverläufen vor dem Zusammenfassen der Intensitätsverläufe vorgesehen, und lediglich die zweite Vielzahl von Intensitätsverläufen zu einem einzigen gemeinsamen Intensitätsverlauf zusammengefasst. Das Auswählen der zweiten Vielzahl aus der ersten Vielzahl geschieht dabei bevorzugt anhand eines geeigneten Auswahlkriteriums des jeweiligen Intensitätsverlaufs, um entsprechend möglichst nur die für das Zusammenfassen geeigneten Intensitätsverläufe auszuwählen. Bevorzugt betrifft das Auswahlkriterium die Stärke der in einem Intensitätsverlauf detektierten Intensität und ist beispielsweise genau dann erfüllt, wenn ein Intensitätswert des jeweiligen Intensitätsverlaufs oder ein davon abgeleiteter Wert (z.B. das Signal-Rausch-Verhältnis) an einem vorbestimmten Messzeitpunkt einen vorbestimmten Schwellenwert erreicht oder übersteigt. Der vorbestimmte Messzeitpunkt liegt vorzugsweise zu Beginn des jeweiligen Intensitätsverlaufs und/oder in der Nähe bzw. kurz nach dem Ende des Anregungspulses, besonders bevorzugt am ersten nach Ende des Anregungspulses detektierten Messzeitpunkt, beispielsweise bei einem Messzeitpunkt von 10 $\mu$s, 20 $\mu$s, 50 $\mu$s oder 100 $\mu$s. Entsprechend werden Intensitätsverläufe mit einem geringen Signal-Rausch-Verhältnis aussortiert und nur Intensitätsverläufe mit einem großen Signal-Rausch-Verhältnis für das Zusammenfassen zu einem gemeinsamen Intensitätsverlauf herangezogen. Dabei ist die zweite Vielzahl von Intensitätsverläufen kleiner oder gleich der ersten Vielzahl von Intensitätsverläufen, letzteres wenn sämtliche detektierten Intensitätsverläufe der ersten Vielzahl das gewählte Auswahlkriterium erfüllen, das heißt beispielsweise ein ausreichend großes Signal-Rausch-Verhältnis aufweisen.

Das Zusammenfassen der ersten oder zweiten Vielzahl von Intensitätsverläufen zu einem einzigen zusammengefassten Intensitätsverlauf erfolgt erfindungsgemäß komponentenweise, das heißt, das Zusammenfassen geschieht, indem von den zusammenzufassenden Intensitätsverläufen jeweils die Intensitätswerte an jeweils den gleichen Messzeitpunkten, das heißt relativ zum jeweiligen Anregungspuls, zusammengefasst werden. Mit anderen Worten werden beim komponentenweisen Zusammenfassen der Intensitätsverläufe jeweils diejenigen Intensitätswerte zusammengefasst, die die Intensitätsverläufe zum jeweiligen entsprechenden Messzeitpunkt nach Ende des jeweiligen Anregungspulses aufweisen. Entsprechend ist es dabei vorteilhaft, wenn - wie oben beschrieben - die diskreten Intensitätswerte sämtlicher Intensitätsverläufe zu jeweils identischen Messzeitpunkten detektiert werden bzw. sämtliche Intensitätsverläufe die gleiche Sequenz von Messzeitpunkten aufweisen. Entsprechend weist dann auch der zusammengefasste Intensitätsverlauf die gleiche Anzahl von Intensitätswerten wie die zusammenzufassenden Intensitätsverläufe, das heißt wie die erste bzw. zweite Vielzahl von Intensitätsverläufen, sowie auch die gleichen Messzeitpunkte auf. Sofern jedoch die Intensitätswerte der zusammenzufassenden Intensitätsverläufe zu unterschiedlichen Messzeitpunkten erfasst werden, können die zusammenzufassenden Intensitätsverläufe vor dem Zusammenfassen beispielsweise interpoliert und/oder extrapoliert werden. In jeden der zusammengefassten Intensitätswerte, die den zusammengefassten Intensitätsverlauf bilden, gehen die Intensitätswerte mehrerer unterschiedlicher Detektionsbereiche ein (die in unterschiedlichen Erfassungsbereichen auf dem Wertdokument liegen), wobei die unterschiedlichen Detektionsbereiche, deren Intensitätswerte in denselben zusammengefassten Intensitätswert eingehen, vorzugsweise nicht miteinander überlappen.

Das komponentenweise Zusammenfassen von jeweils der Vielzahl von Intensitätswerten der Vielzahl von zusammenzufassenden Intensitätsverläufen zu einem gegebenen Messzeitpunkt erfolgt beispielsweise durch (komponentenweise) Addition, (komponentenweise) Mittelwertbildung oder (komponentenweise) Quantile-, insbesondere Median-Bestimmung.

Im Ergebnis ergibt sich somit für jeden vorbestimmten Messzeitpunkt ein einziger zusammengefasster Intensitätswert für den zusammengefassten Intensitätsverlauf.

Das erfindungsgemäße Verfahren umfasst weiterhin den Schritt des Bestimmens einer Zeitkonstante $\tau$ des zusammengefassten Intensitätsverlaufs.

Üblicherweise ist das Abklingverhalten bzw. der Intensitätsverlauf nach einer gepulsten Anregung der zu detektierenden Lumineszenz des zu prüfenden Lumineszenzstoffs näherungsweise mono-exponentiell, wozu gegebenenfalls, beispielsweise mit Hilfe eines dem Photodetektor vorgeschalteten optischen Filters, ein geeigneter Ausschnitt des Lumineszenzspektrums gewählt wird, der beispielsweise auf einen einzigen lumineszierenden Zustandsübergang des Lumineszenzstoffs zurückgeht. Beispielsweise emittiert der Lumineszenzstoff bzw. das Sicherheitsmerkmal genau eine Art von Lumineszenz, das heißt Lumineszenz, die auf einen einzigen lumineszierenden Zustandsübergang des Lumineszenzstoffs zurückgeht, so dass entsprechend das gesamte Lumineszenzspektrum für die Detektion der Intensitätswerte des Intensitätsverlaufs bei zugleich mono-exponentiellem Abfall verwendet werden kann. Beispielsweise enthält das Wertdokument nur genau einen Lumineszenzstoff.

Entsprechend kann dann das Bestimmen der Zeitkonstante $\tau$ des zusammengefassten Intensitätsverlaufs über einen nicht-linearen Least-Square-Fit einer mono-exponentiellen Abklingkurve an den zusammengefassten Intensitätsverlauf durchgeführt werden, oder auch über einen linearen Least-Square-Fit an den logarithmierten zusammengefassten Intensitätsverlauf. Alternativ kann die Zeitkonstante auch über den Abklingquotienten des zusammengefassten Intensitätsverlaufs (siehe Formel 1), die Ableitungsfunktion des zusammengefassten Intensitätsverlaufs (siehe Formel 2) oder die Stammfunktion des zusammengefassten Intensitätsverlaufs durchgeführt werden.

$$\tau = -\frac{T_2 - T_1}{\ln(I(T_2)/I(T_1))} \qquad \text{(Formel 1)}$$

$$\tau = -2\Delta \cdot \frac{I(T)}{I(T+\Delta) - I(T-\Delta)} \qquad \text{(Formel 2)}$$

Wie aus beiden obigen Formeln ersichtlich, kann bei der Annahme eines mono-exponentiellen Abklingens die Zeitkonstante $\tau$ anhand von lediglich zwei bzw. drei Intensitätswerten des Intensitätsverlaufs bestimmt werden. Entsprechend ist es für das Detektieren der ersten Vielzahl von Intensitätsverläufen ausreichend, dabei für alle detektierten Intensitätsverläufe jeweils lediglich zwei bzw. drei Intensitätswerte (zu geeigneten Messzeitpunkten relativ zu dem Anregungspuls) zu detektieren. Entsprechend reduziert sich auch der Rechenaufwand beim Zusammenfassen der Intensitätsverläufe zu einem zusammengefassten Intensitätsverlauf, der üblicherweise genau einmal pro Wertdokument bestimmt wird. Auch im Fall eines nichtmonoexponentiellen Abklingens kann eine Zeitkonstante analog mit den beschriebenen Verfahren aus z.B. zwei bzw. drei Intensitätswerten des Intensitätsverlaufs bestimmt werden.

In dem erfindungsgemäßen Verfahren wird das Wertdokument anhand der bestimmten Zeitkonstante $\tau$ des zusammengefassten Intensitätsverlaufs, insbesondere hinsichtlich seiner Echtheit und/oder hinsichtlich seiner Wertdokumentart (z.B. Denomination), geprüft, beispielsweise indem die bestimmte Zeitkonstante $\tau$ mit der (erwarteten) charakteristischen Zeitkonstante $\tau_0$ des Lumineszenzstoffs verglichen wird und in Abhängigkeit davon das Wertdokument im Hinblick auf seine Echtheit oder seine Wertdokumentart klassifiziert wird. So kann z.B. geprüft werden, ob die Differenz der bestimmten Zeitkonstante $\tau$ von der erwarteten charakteristischen Zeitkonstante $\tau_0$ des Lumineszenzstoffs, oder deren Verhältnis, einen ausgewählten Schwellenwert unter- bzw. überschreitet oder nicht, und z.B. im Fall des Überschreitens das Wertdokument als echt oder falsch klassifiziert werden.

Das erfindungsgemäße Vorbeitransportieren der zu prüfenden Wertdokumente an dem Sensor erfolgt beispielsweise mit Hilfe einer Transporteinrichtung, mit der die Wertdokumente vorzugsweise mit einer vorbestimmten konstanten Transportgeschwindigkeit während der Messung an dem Sensor vorbeitransportiert werden, so dass die Wertdokumente sowohl während der Lumineszenzanregung bzw. während des Anregungspulses, als auch während des Detektierens der Vielzahl von Intensitätsverläufen und deren Intensitätswerten, sich mit der vorbestimmten, konstanten Transportgeschwindigkeit relativ zu dem ortsfesten Sensor bewegen.

Im einfachsten Fall regt die Anregungsquelle bzw. der von der Anregungsquelle abgegebene Anregungspuls das Wertdokument vollflächig zur Lumineszenz an. Besonders bevorzugt regt ein gegebener Anregungspuls der Anregungsquelle das Wertdokument jedoch nur in einem Teilbereich zur Lumineszenz an, der zumindest den zu dem Anregungspuls bzw. dem nachfolgenden Intensitätsverlauf gehörigen Erfassungsbereich auf dem Wertdokument umfasst. Dieser Erfassungsbereich ist derjenige Bereich des Wertdokuments, der von dem Detektionsbereich des ortsfesten Detektors bzw. Photodetektors des Sensors während des Detektierens des zu dem Anregungspuls gehörigen Intensitätsverlaufs bis zum End-Messzeitpunkt überstrichen wird.

Entsprechend kann je nach eingestellter Transportgeschwindigkeit, gewähltem End-Messzeitpunkt und Länge des Wertdokuments in Transportrichtung leicht eine große Anzahl von Intensitätsverläufen pro Wertdokument, beispielsweise pro Banknote, sequentiell detektiert werden. Wenn beispielsweise die Transportgeschwindigkeit 10 m/s, die Dauer des Anregungspulses 10 μs und der End-Messzeitpunkt 1 ms beträgt, so bewegt sich das Wertdokument während der Detektion eines Intensitätsverlaufs um 10 mm. Da unmittelbar anschließend an den End-Messzeitpunkt der Anregungspuls des nächsten zu detektierenden Intensitätsverlaufs abgegeben werden kann, kann somit im Wesentlichen mit einem Photodetektor ein Intensitätsverlauf pro Zentimeter detektiert werden. Bei einem Wertdokument mit einer Länge von 10 cm können somit sequentiell bzw. örtlich hintereinander bzw. mit einer Messspur zehn Intensitätsverläufe detektiert werden. Beispielsweise beträgt die erste Vielzahl 2, 3, 4, 6, 8, 10, 12, 16, 20, 25, 30, 40, 50, 70, 100 oder jeweils mehr. Bevorzugt beträgt die erste Vielzahl von detektierten Intensitätsverläufen mindestens 4, besonders bevorzugt mindestens 8, da dann die komponentenweise Mittelung robuster gegenüber einem einzelnen Ausreißer-Messwert ist.

Ein erfindungsgemäßer Sensor weist einen oder mehrere Photodetektoren auf zum Detektieren jeweils eines Intensitätsverlaufs der Lumineszenz, die das durch die Anregungsquelle angeregte Wertdokument in einem Detektionsbereich aussendet. Der Sensor weist im einfachsten Fall genau eine Messspur auf, entlang der die erste Vielzahl von Intensitätsverläufen detektiert wird. Er kann aber auch mehrere Messspuren aufweisen. Insbesondere umfasst der Sensor pro Messspur genau einen Photodetektor zum Detektieren von Intensitätsverläufen der Lumineszenz, die das durch die Anregungsquelle angeregte Wertdokument in dem Detektionsbereich des Photodetektors jeweils aussendet.

In einer bevorzugten Ausführungsform wird die erste Vielzahl von Intensitätsverläufen auf dem vorbeitransportierten Wertdokument durch (genau) einen Photodetektor des Sensors detektiert, der die Intensitätsverläufe der ersten Vielzahl von Intensitätsverläufen auf dem vorbeitransportierten Wertdokument als Funktion der Zeit detektiert, während das Wertdokument zu dessen Prüfung an dem Sensor bzw. Photodetektor vorbeitransportiert wird. Die verschiedenen Intensitätsverläufe der ersten Vielzahl von Intensitätsverläufen detektiert der Photodetektor sequentiell von unterschiedlichen Orten bzw. Erfassungsbereichen auf dem Wertdokument.

Insbesondere detektiert der Photodetektor bei dieser Ausführungsform sequentiell einen ersten Intensitätsverlauf der ersten Vielzahl von Intensitätsverläufen in einem ersten Erfassungsbereich auf dem Wertdokument und einen zweiten Intensitätsverlauf der ersten Vielzahl von Intensitätsverläufen in einem vom ersten Erfassungsbereich verschiedenen zweiten Erfassungsbereich auf dem Wertdokument, der entlang der Transportrichtung des Wertdokuments nach dem ersten Erfassungsbereich auf dem Wertdokument angeordnet ist, sowie ggf. weitere Intensitätsverläufe der ersten Vielzahl von Intensitätsverläufen in weiteren, vom ersten und zweiten Erfassungsbereich verschiedenen, Erfassungsbereichen auf dem Wertdokument, die entlang der Transportrichtung des Wertdokuments nach dem ersten und zweiten Erfassungsbereich auf dem Wertdokument angeordnet sind. Insbesondere sind der erste und zweite (und ggf. die weiteren Erfassungsbereiche) derart auf dem Wertdokument angeordnet, dass sie nicht miteinander überlappen.

Doch die erste Vielzahl von Intensitätsverläufen auf dem vorbeitransportierten Wertdokument kann auch von mehreren Photodetektoren des Sensors detektiert werden, die senkrecht zur Transportrichtung des Wertdokuments zueinander versetzt angeordnet sind, und die Lumineszenz des Wertdokuments in parallel zueinander verlaufenden Messspuren detektieren. Die verschiedenen Intensitätsverläufe der ersten Vielzahl von Intensitätsverläufen detektieren die Photodetektoren (gleichzeitig oder sequentiell) von unterschiedlichen Orten bzw. Erfassungsbereichen auf dem Wertdokument, während das Wertdokument an dem Sensor bzw. an den Photodetektoren vorbeitransportiert wird. Es können pro Messspur dabei einer oder mehrere Intensitätsverläufe detektiert werden.

Wenn in jeder Messspur nur ein Intensitätsverlauf der ersten Vielzahl von Intensitätsverläufen detektiert wird, so umfasst die erste Vielzahl von Intensitätsverläufen pro Messspur nur einen Intensitätsverlauf. Beispielsweise wird für jede Messspur aus den vom jeweiligen Photodetektor detektierten Intensitätsverläufen ein zusammengefasster Intensitätsverlauf der jeweiligen Messspur ermittelt und anhand diesem jeweils eine Zeitkonstante für die jeweilige Messspur bestimmt. Aus diesen Zeitkonstanten kann dann eine mittlere Zeitkonstante für den Lumineszenzstoff des Wertdokuments ermittelt werden, anhand der das Wertdokument geprüft wird. Das Wertdokument kann alternativ auch anhand der einzelnen Zeitkonstanten der einzelnen Messspuren geprüft werden.

In einer besonders bevorzugten Ausführungsform umfasst die erste Vielzahl von Intensitätsverläufen die Intensitätsverläufe zweier oder mehrerer Messspuren und pro Messspur jeweils mehrere Intensitätsverläufe. In der besonders bevorzugten Ausführungsform wird die erste Vielzahl von Intensitätsverläufen durch zwei oder mehr Photodetektoren des Sensors detektiert, die senkrecht zur Transportrichtung des Wertdokuments zueinander versetzt angeordnet sind, und die Lumineszenz des Wertdokuments in parallel zueinander verlaufenden Messspuren detektieren. Insbesondere detektiert jeder dieser Photodetektoren entlang seiner Messspur mehrere Intensitätsverläufe der ersten Vielzahl von Intensitätsverläufen sequentiell von unterschiedlichen Orten bzw. Erfassungsbereichen auf dem Wertdokument. Die erste Vielzahl von Intensitätsverläufen umfasst dann jeweils mehrere Intensitätsverläufe zweier oder mehrerer Messspuren. In den aus diesen Intensitätsverläufen zusammengefassten Intensitätsverlauf gehen dann die Intensitätsverläufe einer zweidimensionalen Anordnung von Orten bzw. Erfassungsbereichen auf dem Wertdokument ein. Dadurch wird erreicht, dass die Zeitkonstante des Lumineszenzstoffs aus dem zusammengefassten Intensitätsverlauf besonders genau bestimmt werden kann, insbesondere bei einem in dem Wertdokument verteilten Lumineszenzstoff, der teilweise durch Sicherheitselemente überdeckt ist.

Der erfindungsgemäße Sensor weist eine Steuereinrichtung zur Steuerung des/der Photodetektors/en auf, die dazu ausgebildet ist, den/die Photodetektor/en so anzusteuern, dass dieser/diese die erste Vielzahl von Intensitätsverläufen auf dem Wertdokument detektiert/en, während das Wertdokument an dem Sensor bzw. an dem Photodetektor vorbeitransportiert wird. Die Steuereinrichtung ist insbesondere dazu ausgebildet, den Photodetektor bzw. die Photodetektoren so anzusteuern, dass der Photodetektor/die Photodetektoren die erste Vielzahl von Intensitätsverläufen von unterschiedlichen Orten bzw. Erfassungsbereichen auf dem Wertdokument detektieren. Die unterschiedlichen Orte bzw. Erfassungsbereiche sind dabei insbesondere derart auf dem Wertdokument angeordnet, dass sie nicht miteinander überlappen. Die Steuereinrichtung kann dazu ausgebildet sein, den jeweiligen Photodetektor so anzusteuern, dass dieser verschiedene Intensitätsverläufe der ersten Vielzahl von Intensitätsverläufen sequentiell von unterschiedlichen Orten bzw. Erfassungsbereichen auf dem Wertdokument detektiert. Die Steuereinrichtung kann auch zur Steuerung der jeweiligen Anregungsquelle ausgebildet sein, insbesondere um diese zum Aussenden der Anregungspulse für die erste Vielzahl von Intensitätsverläufen zu veranlassen.

Weiterhin umfasst der erfindungsgemäße Sensor eine Auswerteeinrichtung, die dazu ausgebildet ist, die erste Vielzahl von Intensitätsverläufen oder eine aus der ersten Vielzahl ausgewählte zweite Vielzahl von Intensitätsverläufen zu einem zusammengefassten Intensitätsverlauf (e) zusammenzufassen, eine Zeitkonstante $\tau$ des zusammengefassten Intensitätsverlaufs zu bestimmen, und das Wertdokument anhand der Zeitkonstante $\tau$ des zusammengefassten Intensitätsverlaufs zu prüfen. Die Auswerteeinrichtung ist insbesondere dazu ausgebildet, eine wie oben beschriebene Prüfung des Wertdokuments insbesondere hinsichtlich seiner Echtheit und/oder hinsichtlich seiner Wertdokumentart (z.B. Denomination), durchzuführen. Die Steuereinrichtung und die Auswerteeinrichtung können auch in einer Steuer- und Auswerteeinrichtung integriert sein.

In einer bevorzugten Ausgestaltung weist der Sensor eine Mehrzahl von Messspuren auf, beispielsweise 2, 3, 4, 5, 6, 8 oder 10 Messspuren. Dazu umfasst der Sensor vorzugsweise eine entsprechende Mehrzahl von Photodetektoren, beispielsweise 2, 3, 4, 6, 8 oder 10 Photodetektoren, welche bei bestimmungsgemäßer Anordnung des Sensors in einer Vorrichtung zur Prüfung bevorzugt quer bzw. senkrecht zur Transportrichtung angeordnet sind. Entsprechend ist die Anregungsquelle beispielsweise eingerichtet, sämtliche Erfassungsbereiche der Mehrzahl von Photodetektoren anzuregen. Alternativ kann auch für jeden Photodetektor eine eigene Anregungsquelle vorgesehen sein. Eine derartige Mehrzahl von Messspuren begünstigt das Detektieren einer großen Anzahl von Intensitätsverläufen als erste Vielzahl.

Allgemein wird die Verlässlichkeit der erfindungsgemäßen Prüfung verbessert, je größer die erste Vielzahl ist und/oder je strenger das Auswahlkriterium zur Auswahl der zweiten Vielzahl gewählt werden kann.

Insbesondere wird auf einem vorbeitransportierten Wertdokument die erste Vielzahl von Intensitätsverläufen hintereinander, im Falle genau einer Messspur des Sensors ausschließlich in Transportrichtung hintereinander, das heißt sequentiell, detektiert. Im Falle mehrerer Messspuren kann die erste Vielzahl von Intensitätsverläufen sowohl neben- als auch hintereinander, das heißt sequentiell und parallel bzw. zeitgleich, detektiert werden.

Die für das erfindungsgemäße Verfahren beschriebenen Merkmale gelten entsprechend für den erfindungsgemäßen Sensor, insbesondere für dessen Steuereinrichtung und/oder Auswerteeinrichtung, und umgekehrt.

Eine erfindungsgemäße Vorrichtung zur Bearbeitung von Wertdokumenten umfasst entsprechend einen wie oben beschriebenen Sensor, sowie eine Transporteinrichtung zum Vorbeitransportieren der Wertdokumente an dem Sensor mit üblicherweise einer vorbestimmten, konstanten Transportgeschwindigkeit. Dabei ist die Steuereinrichtung des Sensors dazu eingerichtet, die Anregungsquelle(n) des Sensors so anzusteuern, dass sie mit (jeweils) einem Anregungspuls einen oder mehrere Teilbereiche des Wertdokuments zur Lumineszenz anregen, insbesondere einen oder mehrere Erfassungsbereiche, der/die während des Detektierens des jeweiligen Intensitätsverlaufs von dem Detektionsbereich des Detektors des Sensors überstrichen wird/ werden.

Weitere Vorteile der Erfindung werden nachfolgend anhand des in den begleitenden Figuren erläuterten Ausführungsbeispiels beschrieben. Das Ausführungsbeispiel stellt eine bevorzugte Ausführungsform dar, die die Erfindung in keiner Weise einschränkt. Die gezeigten Figuren sind schematische Darstellungen, die die realen Proportionen nicht notwendigerweise widerspiegeln, sondern einer verbesserten Anschaulichkeit des Ausführungsbeispiels dienen. Im Einzelnen zeigen die Figuren:

Figur 1 eine schematische Ansicht eines Ausführungsbeispiels mit Wertdokument und ortsfestem Sensor in einer Vorrichtung zu Bearbeitung von Wertdokumenten;
Figur 2 eine Draufsicht auf ein Wertdokument; und
Figur 3 ein Diagramm mit Intensitätsverläufen.

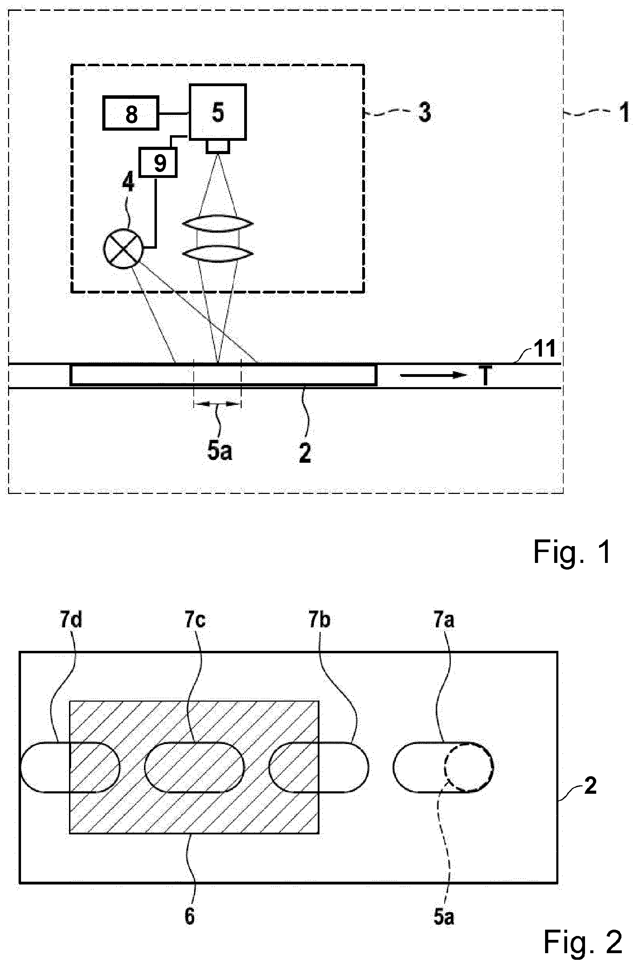

Figur 1 zeigt schematisch einen Ausschnitt einer Vorrichtung 1 zur Bearbeitung von Wertdokumenten 2, die zum Prüfen und ggf. zum Sortieren der Wertdokumente ausgebildet sein kann. Darin wird ein Wertdokument 2, vorliegend eine Banknote, mit Hilfe einer Transporteinrichtung (Transportriemen 11 oder Transportrollen) der Vorrichtung 1 mit konstanter Geschwindigkeit von z.B. 10 m/s entlang einer Transportrichtung an einem Sensor 3 vorbeitransportiert. Der Sensor 3 besteht vorliegend aus einer Anregungsquelle 4 in Form einer gepulsten Lichtquelle, die mit Hilfe der Anregungspulse bzw. Lichtblitze mit einer Dauer von beispielsweise 10 μs jeweils zumindest einen Teilbereich des Wertdokuments 2 anregt. Der Sensor 3 umfasst weiterhin einen Photodetektor 5, vorliegend in Form einer Photodiode, auf dessen lichtempfindlichen Bereich eine Oberfläche des Wertdokuments 2, beispielsweise wie in Figur 1 schematisch dargestellt mit Hilfe zweier Linsen, abgebildet wird. Zwischen den Linsen kann weiterhin ein optisches Filter beispielsweise zur Abschirmung des Anregungslichts und/oder zur Auswahl der zu detektierenden spektralen Komponente der Lumineszenz vorgesehen sein. Aus der Fläche des lichtempfindlichen Bereichs des Photodetektors ergibt sich in dem vorliegenden Ausführungsbeispiel aufgrund der Vergrößerung der optischen Abbildung in der Ebene des Wertdokuments 2 ein kreisförmiger Detektionsbereich 5a mit einem Durchmesser von 5 mm. Weiterhin umfasst der ortsfeste Sensor 3 eine Auswerteeinrichtung 8, die die detektierten Intensitätswerte des Photodetektors 5 ausliest und die Prüfung des Wertdokuments durchführt. Die Steuereinrichtung 9 veranlasst die Aussendung der Anregungspulse der Anregungsquelle 4 und das Detektieren der Messwerte mit dem Photodetektor 5.

In Figur 2 ist das in Transportrichtung T transportierte Wertdokument 2 in Draufsicht dargestellt. Der Lumineszenzstoff ist dabei in dem Wertdokument 2 gleichförmig verteilt, wobei das Wertdokument 2 in einem Teilbereich mit einer intensitäts-reduzierenden Überdruckung 6 versehen ist, welche die vorliegende Intensität der detektierbaren Lumineszenzstrahlung auf 10% des übrigen, nicht abgedeckten Bereichs des Wertdokuments 2 reduziert.

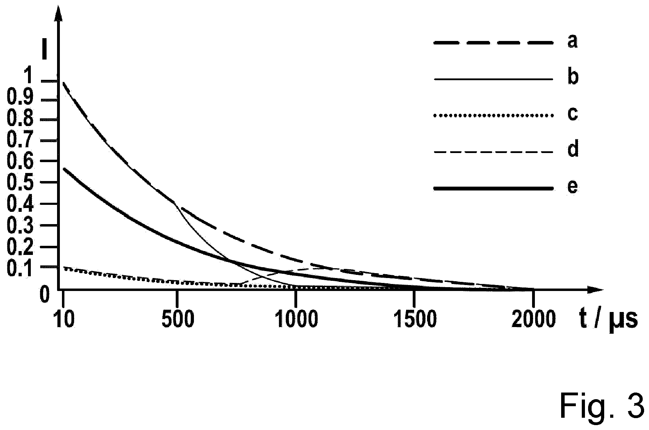

Weiterhin sind in Figur 2 die Erfassungsbereiche 7a - 7d von vier Intensitätsmessungen a - d dargestellt, welche von dem Detektionsbereich 5a des Photodetektors 5 während der Detektion der Intensitätsverläufe jeweils überstrichen werden. Der in Figur 2 gestrichelt dargestellte Detektionsbereich 5a entspricht dem Detektionsbereich des Photodetektors 5 zu Beginn der ersten Messung a, das heißt zu dessen Messzeitpunkt Null, bei bzw. unmittelbar nach dem Ende des zu dieser Messung gehörigen Anregungspulses. Während der in Figur 2 beispielhaft skizzierten vier Messungen a bis d, werden die in Figur 3 schematisch dargestellten Intensitätsverläufe a bis d detektiert. Dabei regt der jeweils zugehörige Anregungspuls zumindest den jeweiligen Erfassungsbereich 7a bis 7d an. Dargestellt sind jeweils Messungen mit einer Dauer von 2 ms, in dem sich das Wertdokument 2 bei einer Transportgeschwindigkeit von 10 m/s um 20 mm bewegt. Wie aus Figur 2 ersichtlich, findet die erste Messung a in dem Erfassungsbereich 7a statt, welcher sich ausschließlich in dem nicht abgedeckten Bereich des Wertdokuments 2 befindet. Entsprechend wird hier ein durch die räumlichen Strukturen des Wertdokuments 2 nicht verfälschter Intensitätsverlauf detektiert (Intensitätsverlauf a in Figur 3). Der in Messung a detektierte Intensitätsverlauf a fällt daher mono-exponentiell mit vorliegend einer Abklingkonstante von 500 μs ab.

Während der nachfolgenden Messung b liegt der Erfassungsbereich 7b sowohl im unabgedeckten Bereich des Wertdokuments 2 wie auch im überdruckten Bereich 6 und überstreicht eine vorauseilende Kante des überdruckten Bereichs 6. Zu Beginn der Messung, nach Abgabe des diesbezüglichen Anregungspulses, liegt der Detektionsbereich 5a noch vollständig im unabgedeckten Bereich. Nach 500 μs beginnt der Detektionsbereich 5a in die Überdruckung 6 einzutreten und liegt bei 1000 μs vollständig in dem überdruckten Bereich. Daher beginnt der bei der Messung b detektierte Intensitätsverlauf b bei einer Messzeit von 500 μs (zusätzlich zu dem exponentiellen Abfall) abzufallen und erreicht bei einer Messzeit von 1000 μs einen Intensitätswert von 10% des unverfälschten Intensitätswerts und fällt dann weiter exponentiell ab.

Die dritte Messung c findet ausschließlich in dem überdruckten Bereich statt. Entsprechend ergibt sich hier ein ausschließlich mono-exponentieller Abfall (Intensitätsverlauf c in Figur 3), der jedoch zu jedem Messzeitpunkt nur 10% der Intensität von Intensitätsverlauf a beträgt.

Während der vierten Messung d überstreicht der Erfassungsbereich 7d wiederum eine Kante, hier die nachlaufende Kante der Überdruckung 6, so dass die Messung zunächst im überdruckten Bereich beginnt. Bei einem Messzeitpunkt von 700 μs beginnt der Detektionsbereich 5a aus der Überdruckung 6 auszutreten, so dass sich hier (siehe Intensitätsverlauf d in Figur 3) eine Zunahme der Intensität ergibt, so dass ab einer Messzeit von 1200 μs die bei Messung d gemessene Intensität der Intensität des Intensitätsverlaufs a entspricht.

Weiterhin ist in Figur 3 der komponentenweise zusammengefasste Intensitätsverlauf e dargestellt, der sich durch komponentenweise Mittelwertbildung der vier Intensitätsverläufe a bis d ergibt. Anhand des zusammengefassten Intensitätsverlaufs e wird dann die Zeitkonstante $\tau$ bestimmt. Dies erfolgt vorliegend anhand des Abklingquotienten gemäß obiger Formel 1, wobei hierzu die Intensitätswerte zu den Messzeitpunkten 10 μs und 1000 μs verwendet werden. Zum Vergleich ist auch die gemäß der Ableitungsfunktion (Formel 2) bestimmte Abklingzeit $\tau$ dargestellt, mit T = 1000 μs und $\Delta$ = 10 μs, wobei hierzu die Intensitätswerte zu den Messzeitpunkten 990 μs, 1000 μs und 1010 μs verwendet werden (welche in der Tabelle allerdings nicht explizit aufgeführt sind).

In der nachfolgenden Tabelle sind die verschiedenen detektierten Intensitätswerte und die daraus gewonnenen Abklingzeiten dargestellt.

|  | Intensitätswerte | | Zeitkonstante $\tau$ gem. | |
|  | 10 $\mu$s | 1000 $\mu$s | (Formel 1) | (Formel 2) |
|---|---|---|---|---|
| Intensitätsverlauf a | 0,9802 | 0,1353 | 500 $\mu$s | 500 $\mu$s |
| Intensitätsverlauf b | 0,9802 | 0,0257 | 273 $\mu$s | 87 $\mu$s |
| Intensitätsverlauf c | 0,0980 | 0,0135 | 500 $\mu$s | 500 $\mu$s |
| Intensitätsverlauf d | 0,0980 | 0,0744 | 3387 $\mu$s | -785 $\mu$s |
| Mittelwert der Zeitkonstanten (Stand der Technik) | | | 1165 $\mu$s | 75 $\mu$s |
| Intensitätswerte bzw. Zeitkonstante des zusammengefassten Intensitätsverlaufs (Erfindung) | 0,5391 | 0,0622 | 459 $\mu$s | 500 $\mu$s |
| tatsächliche Zeitkonstante der Lumineszenz: | | | 500 $\mu$s | |

Erkennbar ergeben sich aus den Messungen a und c, in welchen keine Kante der Überdruckung 6 während des Detektierens des Intensitätsverlaufs überstrichen wird (Erfassungsbereiche 7a und 7c), mit beiden Berechnungsverfahren gemäß Formel 1 wie auch Formel 2 die korrekte, tatsächliche Abklingzeit bzw. Zeitkonstante $\tau_0$ von 500 $\mu$s. Sobald jedoch die räumlichen Strukturen, vorliegend die Kanten der Überdruckung 6, des Wertdokuments 2 während des Detektierens eines Intensitätsverlaufs überstrichen werden (Messungen b und d; Erfassungsbereiche 7b und 7d), ergeben sich bei beiden Berechnungsverfahren völlig falsche Abklingzeiten (negative Abklingzeit von -785 $\mu$s). Auch die dargestellte, als Stand der Technik gekennzeichnete Zeitkonstanten-Mittelung - auf Basis der bei den vier Messungen (Intensitätsverläufe a bis d) festgestellten Zeitkonstanten $\tau$ - ergeben jeweils gemittelte Zeitkonstanten $\tau$ von 1165 $\mu$s bzw. 75 $\mu$s, die deutlich von dem tatsächlichen Wert von 500 $\mu$s abweichen.

Werden dagegen, wie vorliegend beschrieben, die Intensitätswerte der vier Einzelkurven a bis d zuerst komponentenweise, das heißt zu jeweils gleichen Messzeitpunkten, zu einem gemeinsamen Intensitätsverlauf zusammengefasst (zusammengefasster Intensitätsverlauf e) und erst daraus die Zeitkonstante $\tau$ gemäß der Formeln 1 und/ oder 2 bestimmt, so ergeben sich mit beiden Berechnungsverfahren Zeitkonstanten $\tau$, die nicht oder nur wenig von dem tatsächlichen Wert von $\tau_0$ = 500 $\mu$s abweichen.

In dem oben dargestellten Ausführungsbeispiel werden anhand der vier Messungen a bis d lediglich exemplarisch die bei einer Bestimmung des Lumineszenzabfalls typischerweise auftretenden Intensitätsverläufe dargestellt, von denen eine Untermenge aufgrund der räumlichen Strukturen des Wertdokuments 2 verfälscht ist. Je größer allerdings die Anzahl der detektierten Intensitätsverläufe ist, die zunächst zu einem gemeinsamen Intensitätsverlauf zusammengefasst werden, desto näher wird statistisch der zusammengefasste Intensitätsverlauf an der unverfälschten Abklingkurve des Lumineszenzstoffs liegen (skaliert mit einem Faktor, der die durchschnittliche Abdeckung/Abschirmung widerspiegelt, der für die Berechnung der Zeitkonstante $\tau$ allerdings keine Rolle spielt) und entsprechend die an dem zusammengefassten Intensitätsverlauf bestimmte Zeitkonstante $\tau$ am tatsächlichen Wert $\tau_0$ liegen.

Somit schafft die vorliegende Erfindung eine Herangehensweise zur Bestimmung einer Zeitkonstante $\tau$, die zuverlässig nur wenig von der (erwarteten) charakteristischen Zeitkonstante $\tau_0$ des verwendeten Lumineszenzstoffs abweicht, und die dabei weitgehend unabhängig von den auf dem Wertdokument 2 konkret vorliegenden räumlichen Strukturen ist und somit keine Kenntnis der tatsächlichen örtlichen Verteilung des Lumineszenzstoffs bzw. etwaiger Abschirmungen auf dem Wertdokument 2 benötigt. Somit kann die vorliegende Erfindung auf viele, bezüglich der Verteilung des Lumineszenzstoffs bzw. etwaiger Abschirmungen unterschiedlich ausgestaltete Wertdokumente angewendet werden, ohne eine Kenntnis der Lage der entsprechenden räumlichen Strukturen zu erfordern.

**Bezugszeichenliste**

| 1 | Vorrichtung zur Bearbeitung von Wertdokumenten |
| 2 | Wertdokument bzw. Banknote |
| 3 | Sensor |
| 4 | Anregungs- bzw. Lichtquelle |
| 5 | Photodetektor |
| 5a | Detektionsbereich |
| 6 | überdruckter Bereich |
| 7a-d | Erfassungsbereiche |

8      Auswerteeinrichtung
9      Steuereinrichtung

**Patentansprüche**

1.  Verfahren zur Prüfung von Wertdokumenten (2), mit folgenden Schritten:

    - Vorbeitransportieren zu prüfender Wertdokumente, die ein Sicherheitsmerkmal mit einem Lumineszenzstoff aufweisen, an einem Sensor (3),
    - Lumineszenzanregung des jeweiligen Wertdokuments durch eine Anregungsquelle, wobei der Lumineszenzstoff des Wertdokuments, als Reaktion auf die Lumineszenzanregung durch die Anregungsquelle (4), eine Lumineszenz emittiert, die als Funktion der Zeit t einen Intensitätsverlauf mit einer charakteristischen Zeitkonstante $\tau_0$ aufweist,
    - Detektieren einer ersten Vielzahl von Intensitätsverläufen (a - d) auf dem Wertdokument,
    - Zusammenfassen der ersten Vielzahl von Intensitätsverläufen oder einer aus der ersten Vielzahl ausgewählten zweiten Vielzahl von Intensitätsverläufen zu einem zusammengefassten Intensitätsverlauf (e), wobei das Zusammenfassen der ersten oder zweiten Vielzahl von Intensitätsverläufen komponentenweise erfolgt,
    - Bestimmen einer Zeitkonstante $\tau$ des zusammengefassten Intensitätsverlaufs,
    - Prüfen des Wertdokuments, insbesondere hinsichtlich seiner Echtheit und/oder hinsichtlich seiner Wertdokumentart, anhand der Zeitkonstante $\tau$ des zusammengefassten Intensitätsverlaufs.

2.  Verfahren nach Anspruch 1, **dadurch gekennzeichnet, dass** genau eine Art von Lumineszenz detektiert wird und/oder der Lumineszenzstoff genau eine Art von Lumineszenz emittiert und/oder das Wertdokument (2) genau einen Lumineszenzstoff aufweist und/oder der Intensitätsverlauf der Lumineszenz mono-exponentiell ist.

3.  Verfahren nach einem der vorhergehenden Ansprüche, **dadurch gekennzeichnet, dass** die Anregungsquelle (4) zur Lumineszenzanregung einen Anregungspuls abgibt, bevorzugt einen Lichtpuls, und dass die detektierten Intensitätsverläufe (a - d) jeweils aus einer Sequenz von mehreren, insbesondere aus genau zwei oder drei, diskreten Intensitätswerten aufgebaut sind, die bevorzugt zu jeweils vorbestimmten Messzeitpunkten relativ zu dem Anregungspuls detektiert werden, besonders bevorzugt jeweils bis zu einem vorbestimmten End-Messzeitpunkt.

4.  Verfahren nach einem der vorhergehenden Ansprüche, **gekennzeichnet durch** den weiteren Schritt:

    - Auswählen der zweiten Vielzahl von Intensitätsverläufen aus der ersten Vielzahl anhand eines Auswahlkriteriums, wobei das Auswahlkriterium bevorzugt dann erfüllt ist, wenn ein Intensitätswert an einem vorbestimmten Messzeitpunkt, oder ein davon abgeleiteter Wert, einen vorbestimmten Schwellenwert erreicht oder übersteigt, wobei der vorbestimmte Messzeitpunkt insbesondere der erste Messzeitpunkt nach Ende der jeweiligen Lumineszenzanregung, z.B. der erste Messzeitpunkt nach Ende des jeweiligen Anregungspulses, ist.

5.  Verfahren nach einem der vorhergehenden Ansprüche, **dadurch gekennzeichnet, dass** die Wertdokumente mit einer Transportgeschwindigkeit im Bereich 1 bis 12 m/s, bevorzugt 4 bis 11 m/s, an dem Sensor vorbeitransportiert werden.

6.  Verfahren nach einem der vorhergehenden Ansprüche, **dadurch gekennzeichnet, dass** die charakteristische Zeitkonstante $\tau_0$ der Lumineszenz des Wertdokuments im Bereich von 10 µs bis 5 ms, bevorzugt 80 µs bis 2 ms liegt.

7.  Verfahren nach einem der vorhergehenden Ansprüche, **dadurch gekennzeichnet, dass** das Zusammenfassen der ersten oder zweiten Vielzahl von Intensitätsverläufen durch Addition, Mittelwertbildung, Quantile-, oder Median-Bestimmung der ersten oder zweiten Vielzahl von Intensitätsverläufen erfolgt.

8.  Verfahren nach einem der vorhergehenden Ansprüche, **dadurch gekennzeichnet, dass** das Bestimmen der Zeitkonstante $\tau$ des zusammengefassten Intensitätsverlaufs über einen nicht-linearen Least-Square-Fit, einen linearen Least-Square-Fit auf den logarithmierten Intensitätsverlauf, den Abklingquotienten, die Ableitungsfunktion oder die Stammfunktion durchgeführt wird.

9.  Verfahren nach einem der vorhergehenden Ansprüche, **dadurch gekennzeichnet, dass** die Wertdokumente (2), beispielsweise mit Hilfe einer Transporteinrichtung, mit einer vorbestimmten, konstanten Transportgeschwindigkeit an dem Sensor (3) vorbeitransportiert werden, und/oder dass die Anregungsquelle (4) das Wertdokument vollflächig anregt oder das Wertdokument wenigstens in einem Teilbereich anregt, der einen Erfassungsbereich (7a - 7d) enthält, welcher von einem Detektionsbereich (5a) eines Photodetektors (5) des Sensors während des Detektierens des jeweiligen Intensitätsverlaufs überstrichen wird.

10. Verfahren nach einem der vorhergehenden Ansprüche, **dadurch gekennzeichnet, dass** die erste Vielzahl 2, 3, 4, 6, 8,10,12, 16, 20, 25, 30, 40, 50, 70, 100 oder mehr beträgt.

11. Verfahren nach einem der vorhergehenden Ansprüche, **dadurch gekennzeichnet, dass** die erste Vielzahl mindestens 4, insbesondere mindestens 8, beträgt.

12. Verfahren nach einem der vorhergehenden Ansprüche, **dadurch gekennzeichnet, dass** die erste Vielzahl von Intensitätsverläufen, insbesondere sequentiell, von unterschiedlichen Orten auf dem Wertdokument detektiert wird, wobei die erste Vielzahl von Intensitätsverläufen (a - d) vorzugsweise in Transportrichtung hintereinander, insbesondere nebeneinander und hintereinander oder ausschließlich hintereinander, detektiert wird.

13. Sensor (3) zur Prüfung von Wertdokumenten (2), umfassend:

   - wenigstens oder genau eine Anregungsquelle (4) zum Anregen einer Lumineszenz eines Wertdokuments (2), und
   - einen oder mehrere Photodetektoren (5) zum Detektieren eines Intensitätsverlaufs (a - d) der Lumineszenz, die das durch die Anregungsquelle angeregte Wertdokument in einem Detektionsbereich (5a) aussendet,
   - eine Steuereinrichtung (9), die dazu ausgebildet ist, den/die Photodetektor/en so anzusteuern, dass dieser/diese eine erste Vielzahl von Intensitätsverläufen auf dem Wertdokument detektiert/en,
   - eine Auswerteeinrichtung (8), die dazu ausgebildet ist,

      - die erste Vielzahl von Intensitätsverläufen oder eine aus der ersten Vielzahl ausgewählte zweite Vielzahl von Intensitätsverläufen zu einem zusammengefassten Intensitätsverlauf (e) zusammenzufassen, wobei das Zusammenfassen der ersten oder zweiten Vielzahl von Intensitätsverläufen komponentenweise erfolgt,
      - eine Zeitkonstante $\tau$ des zusammengefassten Intensitätsverlaufs zu bestimmen,
      - das Wertdokument anhand der Zeitkonstante $\tau$ des zusammengefassten Intensitätsverlaufs zu prüfen, insbesondere hinsichtlich seiner Echtheit und/oder hinsichtlich seiner Wertdokumentart.

14. Sensor nach Anspruch 13, **dadurch gekennzeichnet, dass** die Steuereinrichtung dazu ausgebildet ist, den/die Photodetektor/en so anzusteuern, dass die erste Vielzahl von Intensitätsverläufen gemäß Anspruch 10 und/oder gemäß Anspruch 11 und/oder gemäß Anspruch 12 detektiert wird und/oder die Auswerteeinrichtung dazu ausgebildet ist, die Prüfung des Wertdokuments gemäß Anspruch 4 und/oder gemäß Anspruch 7 und/oder gemäß Anspruch 8 durchzuführen.

15. Vorrichtung (1) zur Bearbeitung von Wertdokumenten (2) mit einem Sensor (3) gemäß Anspruch 13 oder 14 und mit einer Transporteinrichtung zum Vorbeitransportieren der Wertdokumente an dem Sensor, wobei die Steuereinrichtung (9) des Sensors bevorzugt dazu eingerichtet ist, die Anregungsquelle (4) so anzusteuern, dass diese genau oder wenigstens einen Erfassungsbereich (7a - 7d) auf dem Wertdokument zur Lumineszenz anregt, der während des Detektierens des jeweiligen Intensitätsverlaufs (a - d) von dem Detektionsbereich (5a) überstrichen wird.

**Claims**

1. Method for checking valuable documents (2), comprising the following steps:

   - transporting valuable documents to be checked, which have a security feature with a luminescence material, past a sensor (3),
   - luminescence excitation of the respective valuable document by an excitation source, wherein the luminescence material of the valuable document emits, as a reaction to the luminescence excitation by the excitation source (4), luminescence which has, as a function of time t, an intensity profile with a characteristic time constant $\tau_0$,
   - detecting a first multiplicity of intensity profiles (a - d) on the valuable document,
   - combining the first multiplicity of intensity profiles or a second multiplicity of intensity profiles selected from the first multiplicity into a combined intensity profile (e), wherein the first or second multiplicity of intensity profiles is combined component by component,
- determining a time constant $\tau$ of the combined intensity profile,
- checking the valuable document, in particular regarding its authenticity and/or regarding its valuable-document type, on the basis of the time constant $\tau$ of the combined intensity profile.

2. Method according to Claim 1, **characterized in that** exactly one type of luminescence is detected and/or the luminescence material emits exactly one type of luminescence and/or the valuable document (2) has exactly one luminescence material and/or the intensity profile of the luminescence is monoexponential.

3. Method according to either of the preceding claims, **characterized in that** the excitation source (4) for luminescence excitation emits an excitation pulse, preferably a light pulse, and **in that** the detected intensity profiles (a - d) are each made up of a sequence of a plurality of, in particular of exactly two or three, discrete intensity values which are preferably detected at respectively predetermined measurement times relative to the excitation pulse, with particular preference in each case up to a predetermined end measurement time.

4. Method according to any of the preceding claims, **characterized by** the further step of:

- selecting the second multiplicity of intensity profiles from the first multiplicity on the basis of a selection criterion, wherein the selection criterion is preferably satisfied if an intensity value at a predetermined measurement time, or a value derived therefrom, reaches or exceeds a predetermined threshold value, wherein the predetermined measurement time is in particular the first measurement time after the end of the respective luminescence excitation, for example the first measurement time after the end of the respective excitation pulse.

5. Method according to any of the preceding claims, **characterized in that** the valuable documents are transported past the sensor at a transport speed in the range from 1 to 12 m/s, preferably 4 to 11 m/s.

6. Method according to any of the preceding claims, **characterized in that** the characteristic time constant $\tau_0$ of the luminescence of the valuable document lies in the range from 10 $\mu$s to 5 ms, preferably 80 $\mu$s to 2 ms.

7. Method according to any of the preceding claims, **characterized in that** the first or second multiplicity of intensity profiles is combined by addition, averaging, quantile determination or median determination of the first or second multiplicity of intensity profiles.

8. Method according to any of the preceding claims, **characterized in that** the time constant $\tau$ of the combined intensity profile is determined by way of a non-linear least-squares fit, a linear least-squares fit on the logarithmized intensity profile, the decay quotient, the derivative function or the anti-derivative function.

9. Method according to any of the preceding claims, **characterized in that** the valuable documents (2) are transported past the sensor (3), for example with the aid of a transport device, at a predetermined, constant transport speed, and/or **in that** the excitation source (4) excites the entire area of the valuable document or excites at least a partial region of the valuable document that contains a capture region (7a - 7d), over which a detection region (5a) of a photodetector (5) of the sensor sweeps during the detection of the respective intensity profile.

10. Method according to any of the preceding claims, **characterized in that** the first multiplicity comprises 2, 3, 4, 6, 8, 10, 12, 16, 20, 25, 30, 40, 50, 70, 100 or more.

11. Method according to any of the preceding claims, **characterized in that** the first multiplicity comprises at least 4, in particular at least 8.

12. Method according to any of the preceding claims, **characterized in that** the first multiplicity of intensity profiles is detected, in particular sequentially, from different locations on the valuable document, with the first multiplicity of intensity profiles (a - d) being detected preferably successively, in particular one next to the other and one behind the other or only one behind the other, in the transport direction.

13. Sensor (3) for checking valuable documents (2), comprising:

- at least or exactly one excitation source (4) for exciting luminescence of a valuable document (2), and
- one or more photodetectors (5) for detecting an intensity profile (a - d) of the luminescence that is emitted in a detection region (5a) by the valuable document which has been excited by the excitation source,
- a control device (9), which is designed to control the photodetector(s) in a manner such that it/they detect(s) a first multiplicity of intensity profiles on the valuable document,
- an evaluation device (8), which is designed

- to combine the first multiplicity of intensity profiles or a second multiplicity of intensity profiles selected from the first multiplicity into a combined intensity profile (e), wherein the first or second multiplicity of intensity profiles is combined component by component,
- to determine a time constant $\tau$ of the combined intensity profile,
- to check the valuable document, in particular regarding its authenticity and/or regarding its valuable-document type, on the basis of the time constant $\tau$ of the combined intensity profile.

14. Sensor according to Claim 13, **characterized in that** the control device is designed to control the photodetector(s) in such a way that the first multiplicity of intensity profiles is detected according to Claim 10 and/or according to Claim 11 and/or according to Claim 12 and/or the evaluation device is designed to carry out the checking of the valuable document according to Claim 4 and/or according to Claim 7 and/or according to Claim 8.

15. Apparatus (1) for processing valuable documents (2) with a sensor (3) according to Claim 13 or 14 and with a transport device for transporting the valuable documents past the sensor, wherein the control device (9) of the sensor is preferably configured to control the excitation source (4) in such a way that it excites exactly or at least one capture region (7a - 7d) on the valuable document to luminescence, over which capture region the detection region (5a) sweeps during the detection of the respective intensity profile (a - d).

## Revendications

1. Procédé de vérification de documents de valeur (2), comprenant les étapes suivantes :

- transporter des documents de valeur, devant un capteur (3) dans un sens de transport (T) pour être vérifiés, qui comportent un élément caractéristique de sécurité pourvu d'une substance luminescente qui, en réaction à une excitation de luminescence par une source d'excitation (4), émet une luminescence qui présente, en fonction du temps t, une courbe d'intensité de constante de temps caractéristique $\tau_0$, ledit procédé comprenant les étapes suivantes :
- détecter un premier grand nombre de courbes d'intensité (a - d) sur un document de valeur,
- combiner le premier grand nombre de courbes d'intensité ou un deuxième grand nombre de courbes d'intensité sélectionnées parmi le premier grand nombre pour obtenir une courbe d'intensité combinée (e), la combinaison du premier ou deuxième grand nombre de courbes intensité étant effectuée composant par composant,
- déterminer une constante de temps $\tau$ de la courbe d'intensité combinée,
- vérifier le document de valeur, notamment en ce qui concerne son authenticité et/ou en ce qui concerne son type de document de valeur, en fonction de la constante de temps $\tau$ de la courbe d'intensité combinée.

2. Procédé selon la revendication 1, **caractérisé en ce qu'**exactement un type de luminescence est détecté et/ou la substance luminescente émet exactement un type de luminescence et/ou le document de valeur (2) comporte exactement une substance luminescente et/ou la courbe d'intensité de la luminescence est mono-exponentielle.

3. Procédé selon l'une des revendications précédentes, **caractérisé en ce que** la source d'excitation (4) émet une impulsion d'excitation en vue de l'excitation de luminescence, de préférence une impulsion lumineuse, et les courbes d'intensité détectées (a - d) comprennent chacune une séquence de plusieurs, en particulier d'exactement deux ou trois, valeurs d'intensité discrètes qui sont détectées, de préférence à des instants de mesure prédéterminés relativement à l'impulsion d'excitation, de manière particulièrement préférée jusqu'à un instant de mesure final prédéterminé.

4. Procédé selon l'une des revendications précédentes, **caractérisé par** l'étape supplémentaire suivante :

- sélectionner le deuxième grand nombre de courbes d'intensité parmi le premier grand nombre sur la base d'un critère de sélection, le critère de sélection étant de préférence rempli seulement lorsqu'une valeur d'intensité à un instant de mesure prédéterminé, ou une valeur dérivée de celui-ci, atteint ou dépasse une valeur seuil prédéterminée, l'instant de mesure prédéterminé étant en particulier le premier instant de mesure après la fin de l'excitation de luminescence respective, par exemple le premier instant de mesure après la fin de l'impulsion d'excitation respective.

5. Procédé selon l'une des revendications précédentes, **caractérisé en ce que** les documents de valeur sont transportés devant le capteur à une vitesse de transport dans la plage allant de 1 à 12 m/s, de préférence de 4 à 11 m/s.

6. Procédé selon l'une des revendications précédentes, **caractérisé en ce que** la constante de temps caractéristique $\tau_0$ de la luminescence du document de valeur est dans la plage allant de 10 $\mu$s à 5 ms, de préférence de 80 $\mu$s à 2 ms.

7. Procédé selon l'une des revendications précédentes, **caractérisé en ce que** la combinaison du premier ou du deuxième grand nombre de courbes d'intensité est effectuée par addition, formation de la valeur moyenne, détermination de quantile ou détermination de médiane du premier ou du deuxième grand nombre de courbes d'intensité.

8. Procédé selon l'une des revendications précédentes, **caractérisé en ce que** la détermination de la constante de temps $\tau$ de la courbe d'intensité combinée est effectuée par un ajustement par moindres carrés non linéaire, un ajustement par moindres carrés linéaire sur la courbe d'intensité logarithmique, les quotients de décroissance, la fonction dérivée ou la fonction primitive.

9. Procédé selon l'une des revendications précédentes, **caractérisé en ce que** les documents de valeur (2) sont transportés, par exemple à l'aide d'un module de transport, devant le capteur (3) à une vitesse de transport constante prédéterminée, et/ou **en ce que** la source d'excitation (4) excite le document de valeur sur toute la surface ou excite le document de valeur au moins dans une zone partielle qui contient une zone de détection (7a - 7d) qui est balayée par une zone de détection (5a) d'un photodétecteur (5) du capteur lors de la détection de la courbe d'intensité respective.

10. Procédé selon l'une des revendications précédentes, **caractérisé en ce que** le premier grand nombre est 2, 3, 4, 6, 8, 10, 12, 16, 20, 25, 30, 40, 50, 70, 100 ou plus.

11. Procédé selon l'une des revendications précédentes, **caractérisé en ce que** le premier grand nombre est au moins 4, notamment au moins 8.

12. Procédé selon l'une des revendications précédentes, **caractérisé en ce que** le premier grand nombre de courbes d'intensité sont détectées, notamment séquentiellement, à partir de différents emplacements sur le document de valeur, le premier grand nombre de courbes d'intensité (a - d) étant de préférence détectées les unes derrière les autres, en particulier les unes à côté des autres et les unes derrière les autres ou exclusivement les unes derrière les autres, dans le sens de transport.

13. Capteur (3) destiné à la vérification de documents de valeur (2), ledit capteur comprenant :

   - au moins ou exactement une source d'excitation (4) destinée à stimuler la luminescence d'un document de valeur (2), et
   - un ou plusieurs photodétecteurs (5) destinés à détecter une courbe d'intensité (a - d) de la luminescence que le document de valeur excité par la source d'excitation émet dans une zone de détection (5a),
   - un module de commande (9) qui est conçu pour commander le ou les photodétecteurs de telle sorte que celui-ci/ceux-ci détecte(nt) un premier grand nombre de courbes d'intensité sur le document de valeur,
   - un module d'évaluation (8) qui est conçu pour

      - combiner le premier grand nombre de courbes d'intensité ou un deuxième grand nombre de courbes d'intensité sélectionné parmi le premier grand nombre pour obtenir une courbe d'intensité combinée (e), la combinaison du premier ou deuxième grand nombre de courbes intensité étant effectuée composant par composant,
      - déterminer une constante de temps $\tau$ de la courbe d'intensité combinée,
      - vérifier le document de valeur sur la base de la constante de temps $\tau$ de la courbe d'intensité combinée, notamment en ce qui concerne son authenticité et/ou en ce qui concerne son type de document de valeur.

14. Capteur selon la revendication 13, **caractérisé en ce que** le module de commande est conçu pour commander le ou les photodétecteurs de telle manière que le premier grand nombre de courbes d'intensité selon la revendication 10 et/ou selon la revendication 11 et/ou selon la revendication 12 est détecté et/ou le module d'évaluation est conçu pour mettre en œuvre la vérification du document de valeur selon la revendication 4 et/ou selon la revendication 7 et/ou selon la revendication 8.

15. Dispositif (1) de traitement de documents de valeur (2) avec un capteur (3) selon la revendication 13 ou 14 et avec un module de transport destiné à transporter les documents de valeur devant le capteur, le module de commande (9) du capteur étant de préférence conçu pour commander la source d'excitation (4) de telle sorte qu'elle excite exactement ou au moins une zone de détection (7a - 7d) sur le document de valeur en vue de la luminescence, laquelle zone est balayée par la zone de détection (5a) pendant la détection de la courbe d'intensité respective (a - d).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 20070057198 A